(19) Europäisches Patentamt / European Patent Office / Office européen des brevets

(11) **EP 3 344 860 B1**

(12) **FASCICULE DE BREVET EUROPEEN**

(45) Date de publication et mention de la délivrance du brevet:
**05.05.2021 Bulletin 2021/18**

(21) Numéro de dépôt: **16763912.9**

(22) Date de dépôt: **16.08.2016**

(51) Int Cl.:
*F02B 37/16* (2006.01)      *F02B 39/16* (2006.01)
*F02D 41/00* (2006.01)      *F02B 37/12* (2006.01)

(86) Numéro de dépôt international:
**PCT/FR2016/052080**

(87) Numéro de publication internationale:
**WO 2017/037359 (09.03.2017 Gazette 2017/10)**

(54) **PROCÉDÉ D'OUVERTURE ANTICIPÉE D'UNE VANNE DE DÉCHARGE POUR MOTEUR THERMIQUE TURBOCOMPRESSÉ**

VERFAHREN ZUR FRÜHEN ÖFFNUNG EINES AUSLASSVENTILS FÜR EINE TURBOAUFGELADENE WÄRMEKRAFTMASCHINE

METHOD FOR THE EARLY OPENING OF A DISCHARGE VALVE FOR A TURBOCHARGED HEAT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2015 FR 1558141**

(43) Date de publication de la demande:
**11.07.2018 Bulletin 2018/28**

(73) Titulaire: **PSA Automobiles SA**
**78300 Poissy (FR)**

(72) Inventeur: **POULY, Clement**
**92700 Colombes (FR)**

(56) Documents cités:
**WO-A1-2006/137279      FR-A1- 2 947 866**
**FR-A3- 2 935 748      US-A1- 2015 047 343**

**Description**

La présente invention porte sur un procédé d'ouverture anticipée d'une vanne de décharge pour moteur thermique équipé d'un turbocompresseur et sur un calculateur pour la mise en œuvre de ce procédé.

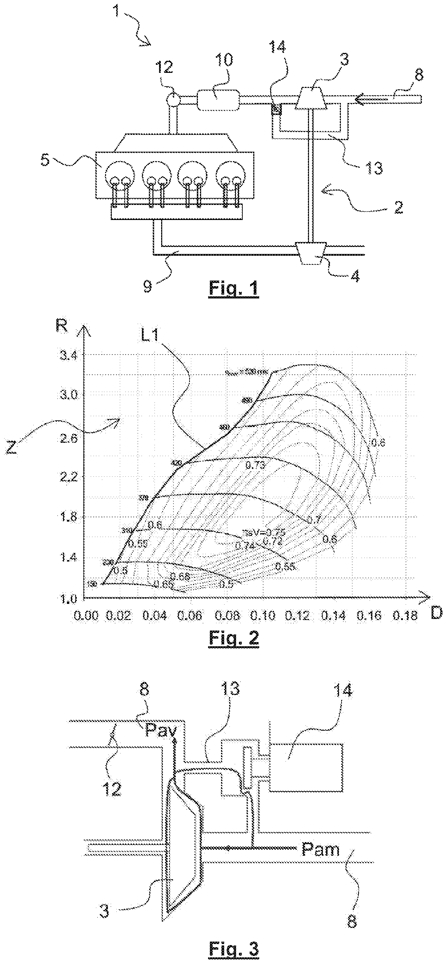

De façon connue en soi, un circuit d'air d'un moteur thermique, illustré par la figure 1, comporte un turbocompresseur 2 comprenant un compresseur 3 et une turbine 4. Le compresseur 3 permet de comprimer l'air d'admission afin d'optimiser le remplissage des cylindres du moteur 5. A cet effet, le compresseur 3 est disposé sur le conduit d'admission 8 en amont du moteur 5. L'écoulement des gaz d'échappement entraîne en rotation la turbine 4 disposée sur le conduit d'échappement 9, laquelle entraîne alors en rotation le compresseur 3 par l'intermédiaire d'un arbre d'accouplement.

Les compresseurs 3 sont définis par des champs compresseurs qui leur sont propres. Les champs compresseurs expriment un rapport de compression R (correspondant au rapport entre la pression en air aval Pav et la pression en air amont Pam du compresseur 3) en fonction d'un débit volumique D, ils présentent chacun une ligne de pompage L1 spécifique qui délimite la zone Z de pompage du compresseur 3. Comme montré sur la figure 2, sur les faibles débits volumiques D, en fonction du rapport de compression R considéré, il apparaît en sortie du compresseur 3 des fluctuations de pression. Si l'on considère des débits volumiques D très faibles, ces fluctuations de pression deviennent trop importantes et peuvent remonter jusqu'à l'entrée du compresseur 3 créant alors des instabilités qui se traduisent par des claquements très bruyant.

En condition de roulage, ce genre de fluctuations de pressions survient lors de situations de vie particulières appelées lâcher de pied : Après une pleine charge, le conducteur relâche l'accélérateur ou change de rapport pour ralentir, la chute rapide de la consigne de couple ferme le papillon d'arrivée des gaz 12 ce qui crée une diminution importante du débit volumique D au niveau du compresseur 3. L'air dans le conduit d'admission 8 est encore sous pression alors que la demande du moteur en termes de débit D est très faible, ce qui amène le compresseur 3 à travailler dans une zone de fort taux de compression R et de faible débit D, ce qui est typique d'un phénomène de pompage. Or, le phénomène de pompage est une situation qui présente deux inconvénients majeurs, à savoir le bruit de pompage que peut entendre le conducteur, ainsi que l'usure prématurée du turbocompresseur 2 due au pompage.

Pour éviter ces désagréments, on ajoute un conduit de décharge 13 associé à une vanne 14, dite vanne de décharge, située en aval du compresseur 3. Comme montré en figure 3, lorsque la vanne de décharge 14 est ouverte, la pression de l'air Pav dans le conduit d'admission 8 en aval du compresseur 3 peut s'évacuer en amont du compresseur 3. Cela permet au compresseur 3 de travailler dans une meilleure zone de fonctionnement, et d'éviter les désagréments précités. Cette vanne de décharge 14 est commandée à partir de paramètres courants avec un calculateur de contrôle moteur qui estime la position du point de fonctionnement dans le champ compresseur, et plus précisément la position du point de fonctionnement par rapport à la ligne de pompage L. Les paramètres courants sont par exemple la pression en air en amont Pam et en aval Pav du compresseur 3, ou encore le débit volumique D au niveau du compresseur 3.

L'inconvénient de tel circuit d'air 1 est qu'un certain nombre de paramètres influencent la perméabilité du système de décharge 13, 14 et jouent sur l'efficacité de l'éradication du pompage. Ces paramètres très variés sont par exemple : les caractéristiques de la vanne de décharge 14 (sa section de passage, le temps de latence à l'ouverture, son positionnement dans le conduit de décharge 13, sa proximité avec le compresseur 3), la présence de singularités dans le circuit d'air 1 (présence ou non de dispositifs atténuateurs de bruit, coudes ou restrictions par exemple), et les diamètres et longueurs des tuyaux du circuit de décharge 13. Ainsi, lors du choix du circuit d'air 1 tous ces paramètres doivent être choisis judicieusement en fonction du moteur 5, du type de compresseur 3, des performances atteignables et de l'espace disponible dans le compartiment moteur du véhicule, afin d'éviter le phénomène de pompage. Or, il est très difficile et surtout très couteux de gérer une telle diversité de produit sur le circuit d'air 1 pour les différents types de compresseur 3, de moteur 5 et de véhicule. C'est pourquoi les constructeurs automobiles choisissent des pièces communes afin de limiter cette diversité de produit. Cependant, avec un procédé de commande classique de la vanne de décharge 14, sur certaines associations moteur-véhicule, on observe dans certains cas de vie des phénomènes de pompage accompagnés de bruits perceptibles par le conducteur.

On connait encore du document US2015047343A1 un procédé de commande d'ouverture anticipée d'une vanne de décharge correspondant au préambule de la revendication 1.

L'invention vise à remédier efficacement à cet inconvénient en proposant un procédé de commande d'ouverture anticipée d'une vanne de décharge associée à un conduit de décharge, ledit conduit de décharge ayant une extrémité amont située en amont d'un compresseur de turbocompresseur équipant un moteur thermique et une extrémité aval située en aval dudit compresseur, caractérisé en ce que ledit procédé comprend :

- une étape de détection d'un cas de vie critique susceptible d'entraîner un phénomène de pompage,
- une étape de détermination d'un débit anticipé, calculé à partir d'un débit de consigne auquel on ajoute un terme de prédiction,
- une étape de positionnement, dans un champ compresseur, d'un point de fonctionnement correspondant audit débit anticipé préalablement déterminé, et

- une étape d'ouverture anticipée de ladite vanne de décharge en fonction de la position du point de fonctionnement dans ledit champ compresseur suite à la détection du cas de vie critique,

caractérisé en ce que le débit anticipé s'exprime de la manière suivante :

$$Da(n)=Dc(n)+ K\times[\Delta D(n)\times T+ \Delta D(n-1)\times(T-1)]$$

avec n étant une valeur de rang de calcul,
n-1 étant une valeur de rang de calcul précédent n,
K étant une calibration d'un horizon de prédiction,
T étant une calibration d'un barycentre entre le $\Delta D(n)$ et le $\Delta D(n-1)$, et
$\Delta D(n)$ étant une variation de débit d'air de consigne observé au rang n et au rang n-1 correspondant à $\Delta D(n)$=filtrage $[Dc(n)-Dc(n-1)]$
"filtrage" représentant un filtre de premier ordre d'une constante de temps calibrable.

L'invention permet ainsi, par l'ouverture anticipée de la vanne de décharge avant l'occurrence du pompage, de compenser le délai d'ouverture de la vanne et d'éviter ainsi de rencontrer du pompage avant l'ouverture de la vanne. Ainsi, on élimine les phénomènes de pompage résiduels sur le véhicule en cas de vie critique qu'une stratégie de commande classique n'arriverait pas à éviter. En évitant le pompage, l'invention va donc permettre de réduire, voire supprimer, le bruit perceptible par le conducteur, et de limiter au maximum le risque de destruction du compresseur. Le débit anticipé est calculé à partir d'un débit de consigne auquel on ajoute un terme de prédiction. Ainsi le terme de prédiction a pour effet de rendre plus dynamique le débit de consigne en amplifiant chacune de ses variations et permet de fournir la tendance d'évolution du débit d'air.

Selon une mise en œuvre, l'étape de détection d'un cas de vie critique est basée sur une analyse de valeurs d'une volonté de conducteur pour déterminer si un transitoire de charge qui débute est un cas de vie critique.

Selon une mise en œuvre, l'analyse des valeurs de la volonté du conducteur dépend d'un gradient de variation d'une volonté d'accélération du conducteur, d'un point de départ d'un transitoire de charge, et d'un signe dudit transitoire charge.

Selon une mise en œuvre, l'étape de positionnement du point de fonctionnement est effectuée par rapport à une ligne de pompage classique.

Selon une mise en œuvre, l'étape de positionnement du point de fonctionnement est effectuée par rapport à une ligne de pompage anticipée obtenue par une calibration spécifique d'une ligne de pompage classique suivant laquelle au moins une partie de ladite ligne de pompage classique est décalée vers des débits volumiques plus élevés dans un champ compresseur correspondant.

Selon une mise en œuvre, en cas de deux transitoires de charge descendants successifs, ledit procédé comporte une étape de filtrage, d'une valeur dudit débit de consigne en début du deuxième transitoire. On évite ainsi que le débit anticipé prennent des valeurs erronées en traitant chaque transitoire comme indépendant des précédents et des suivants.

L'invention a également pour objet un calculateur de contrôle moteur comportant une mémoire stockant des instructions logicielles pour la mise en œuvre du procédé de commande d'ouverture anticipée de la vanne de décharge tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une représentation schématique d'un circuit d'air de moteur;

La figure 2, déjà décrite, est une représentation graphique d'un champ compresseur;

La figure 3, déjà décrite, est une représentation schématique d'un conduit de décharge dans un circuit d'air de moteur thermique;

La figure 4 est une représentation graphique en fonction du temps d'un débit anticipé utilisé dans le procédé selon l'invention par rapport au débit consigne;

La figure 5 est une représentation graphique d'un champ compresseur présentant une ligne de pompage anticipée déterminée dans le procédé selon l'invention;

La figure 6 est une représentation graphique illustrant un écart entre une limite de pompage réelle minimale et une ligne de pompage classique calibrée;

La figure 7 est un diagramme représentant les étapes du procédé d'ouverture anticipée de la vanne de décharge selon la présente invention.

Les éléments identiques, similaires, ou analogues conservent la même référence d'une figure à l'autre.

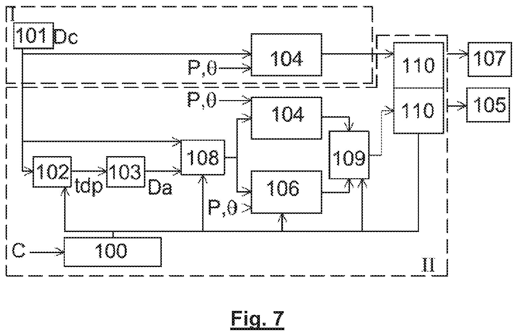

Comme cela est illustré sur la figure 7, le procédé selon l'invention comporte principalement une étape d'identification 100 des cas de vie critiques, et une étape 105 de commande anticipée de l'ouverture de la vanne de décharge 14.

Ainsi, le procédé identifie, dans l'étape 100, les situations de vie critiques où le pilotage classique de la vanne de décharge 14 n'est pas suffisant pour éviter le pompage. Par exemple, sur de forts transitoires de charge (levé de pied brusque depuis la pleine charge par exemple), sur certains systèmes, il n'est pas rare d'observer du pompage sur le début du transitoire tant que la vanne de décharge 14 n'est pas pleinement ouverte. Ceci peut être dû, par exemple, au circuit de décharge 13 ou au temps de latence entre la commande et la réalisation de l'ouverture maximale de la vanne de décharge 14. Par contre, sur des transitoires de charges moins brusques, sur ce même système, le temps de latence est moins critique et n'entraîne pas forcément de pompage si on utilise la stratégie classique de pilotage de la vanne de décharge 14.

A cet effet, le procédé se base sur l'analyse de l'évolution et des valeurs de la volonté conducteur C afin de détecter les cas de vie critiques, et pour déterminer si le transitoire qui débute va constituer un cas critique que le pilotage classique de la vanne de décharge 14 n'est pas capable de traiter sans apparition de pompage. Par exemple, on peut étudier le gradient de variation de la volonté d'accélération du conducteur, le point de départ du transitoire de charge et son signe, afin de détecter notamment les lâchers de pied qui sont sources du pompage.

L'identification des cas de vie critique 100 est réalisée le plus rapidement possible de manière à décontraindre une commande 105 d'ouverture anticipée de la vanne de décharge 14. Les calculs pour cette identification sont donc réalisés le plus rapidement possible, en adoptant par exemple une récurrence de calcul rapide, et en utilisant des informations le moins retardé possible. Par exemple, l'étape de détection de cas de vie critique 100 peut utiliser une image de la volonté du conducteur C « brute », c'est-à-dire avant toute application des filtrages d'agrément.

La commande d'ouverture anticipée 105 de la vanne de décharge 14 est réalisée seulement lorsqu'un cas de vie critique est identifié à l'étape 100. Cette commande est basée sur une commande d'ouverture plus réactive que la commande classique. Deux alternatives existent pour parvenir à cette commande 105.

La première alternative consiste en un calcul d'un débit volumique de consigne anticipé Da lors d'une étape de calcul 103. Classiquement, dans un cas de vie non critique (cf. cadre I) l'étape de commande 107 de l'ouverture de la vanne de décharge 14 utilise un débit volumique d'air de consigne Dc, calculé dans une étape 101, et des mesures de pression en amont Pam et en aval Pav du compresseur 3 pour positionner un point de fonctionnement dans un champ compresseur. Plus précisément, l'étape 104 de positionnement de ce point par rapport à la ligne de pompage L1 calibrée dans le champ compresseur permet de déterminer le besoin d'ouverture ou non de la vanne de décharge 14. Outre le débit de consigne Dc, l'étape 104 dépend de la pression P et de la température $\theta$.

Le débit anticipé Da est plus dynamique et plus réactif que le débit de consigne Dc calculé selon l'état de l'art dans l'étape 101. Ce débit anticipé Da est calculé, dans une étape 103, à partir du débit de consigne Dc auquel on ajoute un terme de prédiction tdp. Ce terme de prédiction tdp, calculé lors d'une étape 102, a pour effet de rendre plus dynamique le débit de consigne Dc en amplifiant chacune de ses variations. On construit ainsi un débit anticipé Da plus réactif que le débit de consigne Dc, qui permet de positionner le point de fonctionnement de manière anticipée dans le champ compresseur par rapport à la ligne de pompage classique L1. Ce positionnement a pour effet le franchissement de manière anticipée de la ligne de pompage L1 permettant l'ouverture anticipée de la vanne de décharge 14 lors de l'étape 105. L'étape de positionnement 104 du point de fonctionnement par rapport à la ligne de pompage classique L1 prend en compte les données telles que la pression P et la température $\theta$.

La formule du débit anticipé Da s'exprime de la manière suivante :

$$Da(n) = Dc(n) + tdp$$

avec $tdp = K \times [\Delta D(n) \times T + \Delta D(n-1) \times (T-1)]$
où : $\Delta D(n) = $ filtrage $[Dc(n)-Dc(n-1)]$

    avec : n : la valeur au rang de calcul courant,
    n-1 : la valeur au rang de calcul précédent,
    "filtrage" : un filtre du premier ordre de constante de temps calibrable Te,
    K : une calibration de l'horizon de prédiction,
    T : calibration du barycentre entre $\Delta D(n)$ et $\Delta D(n-1)$.

En cas de variation du débit d'air D sur un lâcher de pied, le débit anticipé Da évolue plus rapidement à la baisse que le débit de consigne Dc. Le terme de prédiction tdp dépend de la variation du débit de consigne observé au rang courant $\Delta D(n)$ et au rang précédent $\Delta D(n-1)$. Cette dépendance du débit anticipé Da par rapport au débit observé au rang courant $\Delta D(n)$ et au rang précédent $\Delta D(n-1)$ permet de fournir la tendance d'évolution du débit.

On projette cette tendance sur l'horizon choisi par l'intermédiaire du terme K de l'équation afin d'obtenir le terme de prédiction tdp complet. Cette formule du débit anticipé Da permet alors de jouer sur les paramètres Te, K, et T afin de la rendre plus ou moins dynamique en fonction des conditions de fonctionnement tels que le régime moteur, la charge en air des cylindres, la volonté du conducteur C. De plus, on s'assurera que la valeur prise par le débit anticipé Da ne peut pas prendre de valeur non physique telle que des valeurs négatives.

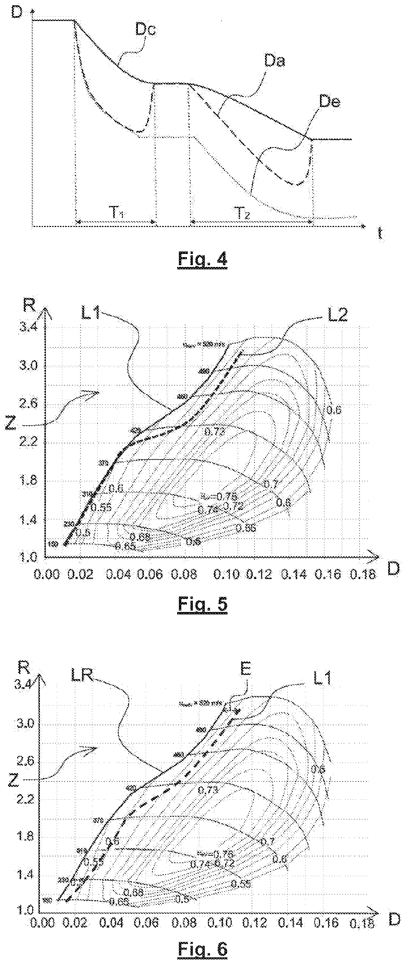

En outre, pour gagner en temps de réaction, le débit anticipé Da est calculé en permanence sur tous les transitoires de charge descendant. Cependant, il ne sera appliqué que lorsqu'un cas de vie critique est identifié à l'étape 100 (cf. cadre II). A cet effet, les phases d'activation et de désactivation du "filtrage" doivent être correctement gérées de manière à traiter chaque transitoire de charge comme indépendant des précédents et des suivants. Par exemple, comme illustré par la figure 4, dans le cas de vie où deux transitoires de charge descendant successifs T1, T2 sont proches, il faut veiller à ce que le "filtre" du deuxième transitoire se base sur la valeur du débit de consigne Dc et non sur la dernière valeur du débit anticipée Da. En effet, si le deuxième transitoire T2 se basait sur la dernière valeur du débit anticipée Da, on obtiendrait des valeurs erronées de débit De dépendantes de l'état de fin du premier transitoire T1, c'est-à-dire dépendantes du débit anticipé Da lors du premier transitoire T1.

La deuxième alternative illustrée par la figure 5 correspond à une utilisation combinée de la première mise en œuvre du procédé et de la création d'au moins une partie d'une ligne de pompage anticipée L2 à la place de la ligne de pompage classique L.

Plus précisément, lorsqu'un cas de vie critique est identifié, au moins une partie de la ligne de pompage classique L1 est décalée à droite dans le champ compresseur, c'est-à-dire vers des débits volumiques D plus élevés. On précise ici qu'on entend par "ligne de pompage classique", la ligne de pompage fournie par le constructeur pour un compresseur 3 de type donné. La ligne de pompage anticipée L2 est une calibration spécifique de la ligne de pompage classique L1 dont le but est de permettre une ouverture anticipée de la vanne de décharge 14. De cette manière, dans une étape 106, le point de fonctionnement basé sur le débit anticipé Da est positionné dans le champ compresseur par rapport à la ligne de pompage anticipée L2 permettant une ouverture encore plus anticipée de la vanne de décharge 14. Outre le débit anticipé Da, l'étape 106 de positionnement prend en compte la pression P et la température θ.

Lors de la détection d'un cas de vie critique identifié comme source de pompage, la meilleure des deux alternatives et la plus adaptée sera sélectionnée dans des étapes de sélection 108 (sélection du débit : débit consigne Dc ou débit anticipé Da), 109 (sélection de la ligne de pompage : classique L1 ou anticipée L2), 110 (sélection de la commande d'ouverture : anticipée 105 ou non anticipée 107) et sera utilisée pour commander l'ouverture anticipée de la vanne de décharge 14 et éviter ainsi le phénomène de pompage.

En outre, comme illustré par la figure 6, le procédé selon l'invention permet d'appréhender différemment le compromis de calibration généralement nécessaire sur la ligne de pompage classique L1. En effet, on calibre la ligne de pompage classique L1 plus proche de la limite de pompage réelle minimale LR en considérant que le pompage résiduel sera géré par l'invention. En limitant l'écart E entre la limite réelle minimale LR et la ligne de pompage classique L1 calibrée on minimisera ainsi le risque de limitation des performances du moteur. Par exemple, cette limitation des performances peut être un point de fonctionnement stabilisé que l'on chercherait à faire dans la zone E, la vanne de décharge 14 étant commandée ouverte, le point serait impossible à réaliser.

En variante, le procédé met en œuvre uniquement un décalage, dans le champ compresseur, d'au moins une partie de la ligne de pompage classique L1 vers des débits volumiques D plus élevés. Ce décalage a ainsi pour effet de positionner le point de fonctionnement issu du débit de consigne classique Dc dans le champ compresseur par rapport à la ligne de pompage anticipée L2, ce qui permet de commander l'ouverture anticipée de la vanne de décharge 14 et d'éviter ainsi le phénomène de pompage. En revanche, le fait de décaler la ligne de pompage sur des cas de vie non critiques aurait pour conséquence de limiter les performances du moteurs : la vanne de décharge 14 risquerait d'être commandée ouverte sur des accélérations fortement chargées proche de la ligne de pompage L2, ce qui se traduirait par une diminution des performances du moteur. Le procédé selon l'invention cible les cas de vie critiques et ne passe sur les calibrations anticipées que sur les phases de lâchers de pied nécessitant une ouverture anticipée de la vanne de décharge 14. On évite ainsi les risques d'ouvertures intempestives de la vanne de décharge 14 sur des accélérations ou stabilisés fortement chargés.

**Revendications**

1. Procédé de commande d'ouverture anticipée d'une vanne de décharge (14) associée à un conduit de décharge (13), ledit conduit de décharge (13) ayant une extrémité amont située en amont d'un compresseur (3) de turbocompresseur équipant un moteur thermique (5) et une extrémité aval située en aval dudit compresseur (3), ledit procédé comprenant :

   - une étape (100) de détection d'un cas de vie critique susceptible d'entraîner un phénomène de pompage,

- une étape (103) de détermination d'un débit anticipé (Da), calculé à partir d'un débit de consigne (Dc) auquel on ajoute un terme de prédiction (tdp),
- une étape (104, 106) de positionnement, dans un champ compresseur, d'un point de fonctionnement correspondant audit débit anticipé (Da) préalablement déterminé, et
- une étape (105) d'ouverture anticipée de ladite vanne de décharge (14) en fonction de la position du point de fonctionnement dans ledit champ compresseur suite à la détection du cas de vie critique,

**caractérisé en ce que** le débit anticipé (Da) s'exprime de la manière suivante :

$$Da(n) = Dc(n) + K \times [\Delta D(n) \times T + \Delta D(n-1) \times (T-1)]$$

avec $n$ étant une valeur de rang de calcul,
$n$ - 1 étant une valeur de rang de calcul précédent $n$,
K étant une calibration d'un horizon de prédiction,
T étant une calibration d'un barycentre entre le $\Delta D(n)$ et le $\Delta D(n$ - 1), et
$\Delta D(n)$ étant une variation de débit d'air de consigne observé au rang $n$ et au rang $n$ - 1 correspondant à $\Delta D(n)$ = *filtrage* [$Dc(n)$ - $Dc(n$ - 1)]
"filtrage" représentant un filtre de premier ordre d'une constante de temps calibrable (Te).

2. Procédé selon la revendication 1, **caractérisé en ce que** l'étape (100) de détection d'un cas de vie critique est basée sur une analyse de valeurs d'une volonté de conducteur (C) pour déterminer si un transitoire de charge qui débute est un cas de vie critique.

3. Procédé selon la revendication 2, caractérisé en que l'analyse des valeurs de la volonté du conducteur (C) dépend d'un gradient de variation d'une volonté d'accélération du conducteur, d'un point de départ d'un transitoire de charge, et d'un signe dudit transitoire charge.

4. Procédé selon l'une quelconque des revendications précédentes, **caractérisé en ce que** l'étape (104) de positionnement du point de fonctionnement est effectuée par rapport à une ligne de pompage classique (L1).

5. Procédé selon l'une quelconque des revendications 1 à 3, **caractérisé en ce que** l'étape (106) de positionnement du point de fonctionnement est effectuée par rapport à une ligne de pompage anticipée (L2) obtenue par une calibration spécifique d'une ligne de pompage classique (L1) suivant laquelle au moins une partie de ladite ligne de pompage classique (L1) est décalée vers des débits volumiques (D) plus élevés dans un champ compresseur correspondant.

6. Procédé selon l'une des revendications précédentes, **caractérisé en ce que** en cas de deux transitoires de charge descendants successifs (T1, T2), ledit procédé comporte une étape de filtrage, d'une valeur dudit débit de consigne (Dc) en début du deuxième transitoire (T2).

**Patentansprüche**

1. Ein Verfahren der Steuerung der frühen Öffnen eines Ablassventils (14) mit zugehörigem einer Entladungsleitung (13), wobei die Abführungsleitung (13) ein stromaufwärtiges Ende, das sich stromaufwärts von einem Kompressor (3) Turbolader mit einer Ausrüstung von Wärmekraftmaschine (5) und ein stromabwärtigen Ende angeordnet nachgeschalteter den Kompressor (3), wobei das Verfahren umfasst eine ant :

   - einen Schritt (100) zum Erkennen eines kritischen Lebensfalls, der wahrscheinlich ein Pumpphänomen verursacht,
   - einen Schritt (103) zum Bestimmen einer erwarteten Durchflussrate (Da), berechnet aus einer Referenzdurchflussrate (Dc), zu der ein Vorhersage-Term (tdp) hinzugefügt wird,
   - einen Schritt (104, 106) zum Positionieren eines Betriebspunkts in einem Kompressorfeld, der der vorher bestimmten erwarteten Durchflussrate (Da) entspricht, und
   - einen Schritt (105), der frühe Öffnen des genannten Ablassventils (14) in Abhängigkeit von der Position des Betriebspunktes in den Kompressor Feld nach der Erfassung des kritischen Lebens Fall,

**dadurch gekennzeichnet, dass** der erwartete Durchfluss (Da) wie folgt ausgedrückt wird :

$$Da(n) = Dc(n) + K \times [\Delta D(n) \times T + \Delta D(n-1) \times (T-1)]$$

Mit *n* ein Berechnungsrangwert sein,
*n* - 1 ein Wert des vorherigen Berechnungsranges sein *n*,
K ist eine Kalibrierung eines Vorhersagehorizonts,
T ist eine Kalibrierung eines Schwerpunkts zwischen *ΔD(n)* und *ΔD(n - 1)* und
*ΔD(n)* Dies ist eine Variation des eingestellten Luftdurchsatzes, der in der Reihe beobachtet wird *n* und in der Reihe *n - 1*
korrespondierend zu *ΔD(n)* = *filtrage* [*Dc(n) - Dc(n - 1)*]
" Filtern", das ein Filter erster Ordnung mit einer kalibrierbaren Zeitkonstante (Te) darstellt.

2. Verfahren nach Anspruch 1, **dadurch gekennzeichnet, dass** der Schritt (100) zum Erfassen eines kritischen Lebensereignisses auf einer Analyse von Werten des Willens eines Fahrers (C) basiert, um zu bestimmen, ob ein beginnender Lasttransient ein kritischer Lebensfall ist.

3. Verfahren nach Anspruch 2, **dadurch gekennzeichnet, dass** die Analyse der Werte des Willens des Fahrers (C) abhängig von einem Gradienten der Variation eines Beschleunigungswillen des Fahrers, von einem Startpunkt eines Last transient, und ein Zeichen für die Last transient.

4. Verfahren nach einem der vorhergehenden Ansprüche, das **dadurch gekennzeichnet ist, dass** der Schritt (104) zum Positionieren des Betriebspunkts in Bezug auf eine herkömmliche Pumpleitung (L1) ausgeführt wird.

5. Verfahren nach einem der Ansprüche 1 bis 3, das **dadurch gekennzeichnet ist, dass** der Schritt (106) zum Positionieren des Betriebspunkts in Bezug auf eine erwartete Pumpleitung (L2) ausgeführt wird, die durch eine spezifische Kalibrierung einer konventionellen Pumpleitung (L1) erhalten wird wonach mindestens ein Teil der herkömmlichen Pumpleitung (L1) in einem entsprechenden Kompressorfeld zu höheren Volumenströmen (D) hin verschoben wird.

6. Verfahren nach einem der vorhergehenden Ansprüche, das
**dadurch gekennzeichnet ist, dass** im Fall von zwei aufeinanderfolgenden absteigenden Lasttransienten (T1, T2) das Verfahren einen Schritt des Filterns eines Wertes des Referenzflusses (Dc) zu Beginn des zweiten Transienten umfasst (T2).

**Claims**

1. A method of controlling the early opening of a discharge valve (14) associated with a discharge conduit (13), said discharge conduit (13) having an upstream end located upstream of a compressor (3) turbocharger equipping a heat engine (5) and a downstream end located downstream of said compressor (3), said method comprising :

- a step (100) of detecting a critical life case likely to cause a pumping phenomenon,
- a step (103) of determining an anticipated flow rate (Da), calculated from a reference flow rate (Dc) to which a prediction term (tdp) is added,
- a step (104, 106) of positioning, in a compressor field, an operating point corresponding to said anticipated flow rate (Da) determined beforehand, and
- a step (105) of early opening of said discharge valve (14) as a function of the position of the operating point in said compressor field following the detection of the critical life case,

**characterized in that** the anticipated flow rate (Da) is expressed as follows :

$$Da(n) = Dc(n) + K \times [\Delta D(n) \times T + \Delta D(n-1) \times (T-1)]$$

with *n* being a computation rank value,
*n* -1 being a value of previous computation rank *n* ,

K being a calibration of a prediction horizon,

T being a calibration of a barycenter between $\Delta D(n)$ et le $\Delta D(n - 1)$, and

$\Delta D(n)$ being a variation of the set air flow rate observed at the row $n$ and at the row $n$ -1 corresponding to $\Delta D(n)$ = *filtrage* [$Dc(n) - Dc(n - 1)$]

" filtering" representing a first order filter with a calibratable time constant (Te).

2. Method according to claim 1, **characterized in that** the step (100) of detecting a critical life case is based on an analysis of values of a driver's will (C) to determine whether a transient of load that begins is a critical life case.

3. Method according to claim 2, **characterized in that** the analysis of the values of the will of the driver (C) depends on a gradient of variation of a will to acceleration of the driver, from a starting point of a load transient, and a sign of said load transient.

4. Method according to any one of the preceding claims, **characterized in that** the step (104) of positioning the operating point is performed with respect to a conventional pumping line (L1).

5. Method according to any one of claims 1 to 3, **characterized in that** the step (106) of positioning the operating point is carried out with respect to an anticipated pumping line (L2) obtained by a specific calibration of a line conventional pumping (L1) along which at least a portion of said pumping line vector (L 1) is decal ed to flow volume (D) higher in a compressor corresponding field.

6. Method according to one of the preceding claims, **characterized in that** in the event of two successive descending load transients (T1, T2), said method comprises a step of filtering a value of said reference flow (Dc) at the start of the process second transient (T2).

**Fig. 1**

**Fig. 2**

**Fig. 3**

Fig. 4

Fig. 5

Fig. 6

**Fig. 7**

**EP 3 344 860 B1**

**RÉFÉRENCES CITÉES DANS LA DESCRIPTION**

**Documents brevets cités dans la description**

- US 2015047343 A1